# EUROPÄISCHE PATENTANMELDUNG

(11) **EP 2 055 799 A1**
(43) Veröffentlichungstag der Anmeldung: **06.05.2009**
(21) Anmeldenummer: 07021462.2
(22) Anmeldetag: 05.11.2007
(51) Int. Cl.: C23C 2/02, C23C 2/06, C23C 2/18, C22C 18/00

(54) **Stahlflachprodukt mit einem vor Korrosion schützenden metallischen Überzug und Verfahren zum Erzeugen eines vor Korrosion schützenden metallischen Zn-Mg Überzugs auf einem Stahlflachprodukt**

(71) Anmelder: ThyssenKrupp Steel AG, 47161 Duisburg (DE)
(72) Erfinder: Warnecke, Wilhelm Dr., D-46499 Hamminkeln (DE); Meurer, Manfred, D-47495 Rheinberg (DE); Sommer, Jens Dr., D-59423 Unna (DE); Steinhorst, Michael Dr.-Ing., D-45357 Essen (DE)
(74) Vertreter: Cohausz & Florack

(57) **Zusammenfassung**

Die Erfindung betrifft ein Stahlflachprodukt mit einem Zn-Mg-Al-Überzug. Indem dieser Überzug erfindungsgemäß neben Zink und unvermeidbaren verunreinigungen (in Gew.-%) Mg: 4 - 8 % und Al 0,5 - 1,8 % sowie optional eines oder mehrere der folgenden Elemente mit einem unterhalb der zu jedem dieser Elemente jeweils angegebenen Obergrenze liegenden Gehalte enthält: Si: < 2 %, Pb: < 0,1 %,Ti: < 0,2 %, Ni: < 1 %, Cu: < 1 %, Co: < 0,3 %, Mn: < 0,5 %, Cr: < 0,2 %, Sr: < 0,5 %, Fe: < 3 %, B: < 0,1 %, Bi: < 0,1 %, Cd: < 0,1 %, REM < 0,2 %, Sn < 0,5 %, wird erreicht, dass das erfindungsgemäße Stahlflachprodukt nicht nur hervorragend gegen Korrosion geschützt ist, sondern sich auch sowohl gut schweißen als auch gut mit einer nachträglich aufgebrachten organischen Schicht beschichten lässt. Ebenso betrifft die Erfindung ein Verfahren zur Herstellung eines erfindungsgemäßen Stahlflachproduktes.

Die Zusammenfassung soll ohne Figur veröffentlicht werden.

## Beschreibung

Die Erfindung betrifft ein Stahlflachprodukt mit einem vor Korrosion schützenden metallischen Überzug sowie ein Verfahren zum Erzeugen eines solchen vor Korrosion schützenden metallischen Zn-Mg-Überzugs auf einem Stahlflachprodukt. Unter dem Begriff "Stahlflachprodukt" werden dabei Stahlbänder und -bleche verstanden.

Aus der EP 1 199 376 A1 ist ein mit einer Zn-Legierung beschichtetes Stahlmaterial bekannt, das dadurch eine hervorragende Korrosionsbeständigkeit besitzen soll, dass seine Zn-Legierungsbeschichtung neben Zink (in Gew.-%) 2 - 19 % Al, 2 - 10 % Mg, 0,01 - 2 % Si, sowie erforderlichenfalls Gehalte an In, Bi, Sn, Ca, Be, Ti, Cu, Ni, Co, Cr, Mn, Fe, Sr aufweist. Darüber hinaus kann die Zn-Legierung neben den verfahrenbedingt auftretenden Verunreinigungen sonstige Bestandteile enthalten, deren Gesamtgehalt jedoch auf maximal 0,5 % beschränkt ist. Unter den sonstigen Bestandteilen sollen Pb und Sb mit jeweils nicht mehr als 0,1 % vorhanden sein. Um die Haftung der Zn-Schicht auf dem Stahlsubstrat zu verbessern, kann dabei auf das Stahlsubstrat zunächst eine Ni-Zwichenschicht aufgetragen werden, auf die dann die Zn-Mg-Legierungsbeschichtung aufgebracht wird.

Gemäß der EP 1 199 376 A1 wird die Zn-Mg-Beschichtung durch Feuerbeschichten erzeugt, indem das Stahlband zunächst auf eine ausreichende, jedoch nicht näher angegebene Badeintrittstemperatur erwärmt und anschließend im kontinuierlichen Durchlauf durch ein in geeigneter Weise legiertes Zn-Mg-Al-Si-Schmelzenbad geleitet wird. Um die Entstehung von primären kristallinen Mg2Si-Phasen im Schmelzenbad zu vermeiden, soll gemäß dem bekannten Verfahren dabei die Temperatur des Schmelzenbads mindestens 450 °C betragen. Gleichzeitig soll die Schmelzenbadtemperatur auf maximal 650 °C begrenzt bleiben, um zu gewährleisten, dass das in der bekannten Weise beschichtete Stahlblech eine optimale optische Erscheinung aufweist.

In der Praxis hat sich gezeigt, dass mit einem Zn-Mg-Al-Überzug der in der EP 1 199 376 A1 beschriebenen Art versehene Stahlbleche zwar eine gute Korrosionsbeständigkeit aufweisen. Jedoch müssen dafür eine deutlich eingeschränkte Schweißeignung und eine nur eingeschränkte nachträgliche Beschichtbarkeit, insbesondere Phosphatierbarkeit, in Kauf genommen werden. Aufgrund dieser Nachteile lassen sich in dieser Weise beschichtete Stahlflachprodukte insbesondere im Bereich der Herstellung von Bauteilen für Automobilkarosserien nur bedingt einsetzen.

Ein anderes Verfahren zum Erzeugen eines Mg- und Alhaltigen Zink-Überzugs auf einem Stahlsubstrat, bei dem es sich auch um ein Stahlband handeln kann, ist aus der EP 0 594 520 B1 bekannt. Gemäß diesem bekannten Verfahren wird das zu beschichtende Stahlsubstrat in ein Schmelzenbad getaucht, das (in Gew.-%) 1 - 3,5 % Mg, 0,5 - 1,5 % Al und 0,0010 - 0,0060 % Si enthält. Dementsprechend entsteht auf dem Stahlsubstrat ein metallischer Überzug, der aus einer Zn-Mg-Legierung gebildet ist, deren Gehalte an Mg, Al und Si im Wesentlichen gleich den Gehalten des Schmelzenbades sind. Die Temperatur des Schmelzenbades beträgt bei diesem bekannten Verfahren 400 - 450 °C, wobei das Stahlsubstrat mit einer 350 - 600 °C betragenden Badeintrittstemperatur in das Schmelzenbad geleitet wird.

Gemäß der EP 0 594 520 B1 soll durch die in Abstimmung mit den jeweiligen Al- und Mg-Gehalten erfolgende gezielte Zugabe von geringen Gehalten an Si sichergestellt sein, dass die Oberfläche des Stahlsubstrats gleichmäßig von dem Zn-Mg-Al-Überzug benetzt ist und Fehlerstellen weitestgehend vermieden werden. Dennoch erweisen sich mit metallischen Überzügen der in der EP 0 594 520 B1 beschriebenen Art versehene Stahlbleche in der Praxis als nur unzureichend korrosionsbeständig.

Vor diesem Hintergrund bestand die Aufgabe der Erfindung darin, ein mit einem Zn-mg-Überzug versehenes Stahlflachprodukt zu schaffen, das nicht nur hervorragend gegen Korrosion geschützt ist, sondern sich auch sowohl gut schweißen als auch gut mit einer nachträglich aufgebrachten organischen Schicht beschichten lässt. Darüber hinaus sollte ein Verfahren zur Erzeugung solcherart beschichteter Stahlflachprodukte angegeben werden.

In Bezug auf das Stahlflachprodukt ist diese Aufgabe erfindungsgemäß dadurch gelöst worden, dass das Stahlflachprodukt die in Anspruch 1 angegebenen Merkmale besitzt. Vorteilhafte Ausgestaltungen dieses Produkts sind in den auf Anspruch 1 rückbezogenen Ansprüchen angegeben.

Die erfindungsgemäße Lösung der voranstehend genannten Aufgabe in Bezug auf das Verfahren besteht darin, dass bei der Erzeugung eines mit einem Zn-Mg-Überzug versehenen Stahlflachprodukts die in Anspruch 10 angegebenen Verfahrensschritte absolviert werden. Vorteilhafte Ausgestaltungen dieses Verfahrens sind in den auf Anspruch 10 rückbezogenen Ansprüchen angegeben.

Ein erfindungsgemäßes Stahlflachprodukt weist einen auf Zink basierenden Zn-Mg-Al-Legierungsüberzug auf, dessen Gehalte an Mg mit 4 - 8 Gew.-% und an Al mit 0,5 - 1,8 Gew.-% so eingestellt sind, dass eine optimale Balance zwischen einem hochwirksamen Korrosionsschutz einerseits und guten Verarbeitungseigenschaften andererseits erreicht ist.

Im Salzsprühtest konnte nachgewiesen werden, dass sich bei in erfindungsgemäßer Weise mit einem Zn-Mg-Al-Überzug versehenen Stahlflachprodukten erst nach einer Zeitdauer Rotrost bildet, die auch strengsten Anforderungen stets gerecht wird.

Zu diesem Zweck enthält der erfindungsgemäß auf dem jeweiligen Stahlsubstrat aufgebrachte metallische Überzug mindestens 4 Gew.-% und höchstens 8 Gew.-% Magnesium. Die vergleichbar hohen Mg-Gehalte gewährleisten einen gegenüber dem Stand der Technik deutlich verbesserten Korrosionsschutz.

Gleichzeitig ist die für den Überzug benötigte Zinkmenge um den hohen, von den Materialkosten her deutlich günstigeren Magnesiumanteil verringert. Ein erfindungsgemäß legierter Überzug kann daher auch kostengünstiger erzeugt werden als Überzüge, die geringere Magnesiumgehalte besitzen.

Auch in Bezug auf die Reibwerte bei einer Verformung erweist sich der hohe Mg-Gehalt eines erfindungsgemäßen Überzugs als positiv. So zeigt der erfindungsgemäß legierte Zn-Mg-Al-Überzug gegenüber reinen Zn-Überzügen deutlich verminderte Reibwerte.

Positiv erweisen sich die in Summe jeweils mindestens 4,5 % des Auflagengewichts einnehmenden, gegenüber Zn vom Gewicht her wesentlich leichteren Anteile an Mg und Al in Bezug auf das Gesamtgewicht der in erfindungsgemäßer Weise beschaffenen Flachprodukte.

Erfindungsgemäß beschichtete Stahlflachprodukte zeigen in Folge der geringen Gehalte an Al eine besonders gute Eignung zur Phosphatierung, so dass sie beispielsweise ohne besondere zusätzliche Maßnahmen mit einer organischen Lackbeschichtung versehen werden können.

Gleichzeitig ist der Al-Gehalt eines erfindungsgemäß aufgetragenen Zn-Ng-Al-Überzugs so abgestimmt, dass eine für die Haftung und auch Schweißeignung ideale Verteilung des Aluminiums in der Überzugsschicht eintritt. So hat sich herausgestellt, dass bei einer erfindungsgemäßen Beschichtung in einer oberflächennahen Zwischenschicht ausreichender Dicke geringe Al-Gehalte vorhanden sind, durch die eine gegenüber konventionell ausgebildeten Blechen verbesserte Schweißeignung gegeben ist, obwohl der Al-Gehalt des Überzugs insgesamt auf einem Niveau liegt, der den hohen Korrosionsschutz des erfindungsgemäßen Überzugs effektiv unterstützt.

Untersuchungen haben ergeben, dass bei einem erfindungsgemäßen Überzug auch ohne die Anwesenheit von wirksamen Mengen an Si eine Dichtheit und Haftung auf dem Substrat gesichert ist, durch welche ein gegenüber dem Stand der Technik deutlich verbesserter Korrosionsschutz erreicht und die Gefahr von Rissbildung und Abplatzungen bei der Umformung auf ein Minimum reduziert ist. Soweit erforderlich, kann die Qualität des erfindungsgemäßen Überzugs jedoch dadurch weiter verbessert werden, dass in ihm Si in wirksamen Gehalten vorhanden ist. Die Si-Gehalte sollten jedoch kleiner als 2 Gew.-% sein, da bei Überschreiten dieser Obergrenze eine erhöhte Neigung zur Rissbildung im Überzug bei der Umformung eines entsprechend beschichteten Stahlflachprodukts beobachtet worden ist. Die im Rahmen der Erfindung erforderlichenfalls genutzten positiven Effekte des Vorhandenseins von Silizium in einem erfindungsgemäßen Überzug treten insbesondere dann sicher ein, wenn der Si-Gehalt des metallischen Überzugs mindestens 0,15 Gew.-% beträgt. Um möglicherweise negative Auswirkungen des Si-Gehalts auf die Verformbarkeit des Überzugs sicher auszuschließen, kann es dabei vorteilhaft sein, den Si-Gehalt des erfindungsgemäß legierten Zn-Mg-Al-Überzugs auf weniger als 0,8 Gew.-%, insbesondere auf bis zu maximal 0,25 Gew.-%, zu beschränken.

Neben den erfindungsgemäß immer vorhandenen Gehalten an Mg und Al sowie dem optionalen Gehalt an Si kann ein erfindungsgemäß beschaffener Überzug zur Ausprägung bestimmter Eigenschaften wahlweise zusätzlich ebenfalls optional ein Element oder mehrere Elemente aus der Gruppe "Pb, Ti, Ni, Cu, Co, Mn, Cr, Sr, Fe, B, Bi, Cd, REM, Sn" enthalten, wobei (in Gew.-%) der Gehalt an Pb < 0,1 %, der Gehalt an Ti < 0,2 %, der Gehalt an Ni < 1 %, der Gehalt an Cu < 1 %, der Gehalt an Co < 0,3 %, der Gehalt an Mn < 0,5 %, der Gehalt an Cr < 0,2 %, der Gehalt an Sr < 0,5 %, der Gehalt an Fe < 3 %, der Gehalt an B < 0,1 %, der Gehalt an Bi < 0,1 % der Gehalt an Cd < 0,1 %, der Gehalt an REM (REM = Rare Earth Metals (Seltenerdmetalle)) < 0,2 % und der Gehalt an Sn < 0,5 % sein sollte.

Pb, Bi und Cd können dabei zur Ausbildung einer größeren Kristallstruktur (Zinkblume), Ti und B zur Verbesserung der Umformbarkeit und der Härte, Cu, Ni, Co, Cr, Sr und Mn zur positiven Beeinflussung der Grenzschichtreaktionen vorhanden sein. Die Anwesenheit von Fe trägt positiv zur gewünschten Phasenbildung bei. Sn kann zur positiven Beeinflussung der Oberflächenoxidation und ein oder mehrere Seltenerdmetalle "REM", insbesondere Lanthan und Cer, können zur Verbesserung des Fließverhaltens der Überzugsschmelze zugegeben werden.

Um zu vermeiden, dass die Anwesenheit der optional vorhandenen Legierungselemente "Si, Pb, Ti, Ni, Cu, Co, Mn, Cr, Sr, B, Bi, Cd, REM und Sn" sich in einem erfindungsgemäß legierten Überzug zu Ungunsten der Wirkung der Hauptlegierungselemente Al und Mg auswirken, ist es vorteilhaft, wenn die Summe der Gehalte an diesen optional zugegebenen Elementen 0,8 Gew.-% nicht überschreitet.

Zu den Verunreinigungen, die in einem erfindungsgemäßen Korrosionsschutzüberzug enthalten sein können, zählen unter Anderem die Bestandteile, die in Folge des Schmelztauchbeschichtens aus dem Stahlsubstrat in den Überzug gelangen, wobei die Gehalte des Überzugs an diesen Elementen so gering bleiben, dass die Eigenschaften des Überzugs nicht beeinflusst werden. Letzteres ist insbesondere dann sichergestellt, wenn der metallische Überzug höchstens 0,3 Gew.-% Verunreinigungen enthält.

Durch die erfindungsgemäße Verfahrensführung wird erreicht, dass sich in der zum Stahlsubstrat angrenzenden Grenzschicht hohe Al- und Mg-Gehalte anreichern, während in der Zwischenschicht insbesondere niedrige Al-Gehalte vorhanden sind. Es hat sich gezeigt, dass bei den relativ niedrigen Al-Gehalten eines zur Durchführung des erfindungsgemäßen Verfahrens verwendeten Schmelzenbades durch eine geeignete Einstellung der Bandeintauch- und/oder der Badtemperatur selbst die Ausprägung des erfindungsgemäß angestrebten Schichtaufbaus direkt beeinflusst werden kann. Dabei kommt der Differenz zwischen der Temperatur des Bandes beim Eintauchen und der Temperatur des Schmelzenbades eine besondere Bedeutung zu. Indem diese Differenz auf einen Bereich von 10 °C bis 60 °C beschränkt wird, wird gewährleistet, dass sich ein erfindungsgemäßer Überzug mit einem einen für seine Haftung auf dem Stahlsubstrat und seine weiteren Verarbeitungseigenschaften optimalen Schichtaufbau bildet.

Optimale Korrosionsschutzeigenschaften des erfindungsgemäß legierten metallischen Überzugs lassen sich dadurch erreichen, dass sein Mg-Gehalt mindestens 4,5 Gew.-% beträgt. Überraschend hat sich dabei gezeigt, dass sich bei auf maximal 6,5 Gew.-% beschränkten Mg-Gehalten, insbesondere in einem Bereich von 4,5 - 6,5 Gew.-% liegenden Mg-Gehalten, erfindungsgemäße Stahlflachprodukte mit einer außergewöhnlich guten Eigenschaftskombination mit hoher Produktionssicherheit erzeugen lassen.

Um die Haftung auf dem Stahlsubstrat und die Duktilität des erfindungsgemäßen Überzugs weiter zu verbessern, kann der Al-Gehalt des Korrosionsschutzüberzugs auf mindestens 1,0 Gew.-% gesetzt werden. Eine Beschränkung des Al-Gehalts auf maximal 1,5 Gew.-% trägt zusätzlich dazu bei, dass bei einem in entsprechender Weise legierten Schmelzenbad die Gefahr von übermäßiger Schlackenbildung minimiert ist.

Beim erfindungsgemäßen Verfahren zum Erzeugen eines mit einem vor Korrosion schützenden metallischen Zn-Mg-Überzugs auf einem Stahlflachprodukt wird zunächst das bevorzugt als warm- oder kaltgewalztes Band vorliegende Stahlflachprodukt auf eine im Bereich von 360 - 710 °C liegende Badeintrittstemperatur erwärmt. Die Differenz zwischen der Badeintrittstemperatur und dem Schmelzenbad sollte dabei 10 - 60 °C nicht überschreiten, um die Temperatur des Schmelzenbades ohne größeren Aufwand konstant halten zu können und zu gewährleisten, dass sich im erfindungsgemäß erhaltenen Überzug ein Schichtaufbau ausbildet, der einerseits eine optimale Haftung auf dem Stahlsubstrat und andererseits einen optimalen Korrosionsschutz bei guter Schweißbarkeit und Beschichtbarkeit mit einem organischen Beschichtungsmittel gewährleistet.

Anschließend wird das derart erwärmte Stahlflachprodukt unterbrechungsfrei im kontinuierlichen Durchlauf durch ein auf eine Schmelzenbadtemperatur von 350 - 650 °C erwärmtes Zn-Mg-Al-Schmelzenbad geleitet, das neben Zink und unvermeidbaren Verunreinigungen (in Gew.-%) 4 - 8 % Mg und 0,5 - 1,8 % Al aufweist. Praktische Versuche haben ergeben, dass besonders gute Produktionsergebnisse erhalten werden, wenn die Schmelzenbadtemperatur im Bereich von 430 - 490 °C gehalten wird.

Dabei ergab sich überraschender Weise, dass sich das Schmelzenbad auch ohne Schutzgasbeaufschlagung gefahrlos bei dieser Temperatur halten ließ, ohne dass es zu einer die Qualität des Überzugs negativ beeinflussenden Reaktion des Magnesiums mit dem Umgebungssauerstoff kam.

Wie oben im Zusammenhang mit dem erfindungsgemäß beschaffenen Stahlflachprodukt erläutert, kann im Schmelzenbad zusätzlich optional eines oder mehrere der folgenden Elemente mit einem unterhalb der zu jedem dieser Elemente jeweils angegebenen Obergrenze liegenden Gehalt enthalten sein: Si < 2 %, Pb: < 0,1 %, Ti: < 0,2 %, Ni: < 1 %, Cu: < 1 %, Co: < 0,3 %, Mn: < 0,5 %, Cr: < 0,2 %, Sr: < 0,5 %, Fe: < 3 %, B: < 0,1 %, Bi: < 0,1 %, Cd: < 0,1 %, REM < 0,2 %, Sn < 0,5.

An dieser Stelle ist darauf hinzuweisen, dass die Legierungsgehalte des zum erfindungsgemäßen Auftrag des Überzugs genutzten Schmelzenbad sich im Wesentlichen identisch im fertigen Überzug wieder finden.

Dementsprechend gelten die hier im Zusammenhang mit der Legierung des erfindungsgemäß ausgebildeten Korrosionsschutzüberzugs als gegebenenfalls vorteilhaft erwähnte Einstellungen der Gehalte einzelner Legierungselemente immer auch für die Legierung des Schmelzenbads.

Nach dem Verlassen des Schmelzenbads wird die Schichtdicke des metallischen Überzugs durch Entfernen von überschüssiger Zn-Mg-Al-Schmelze in an sich bekannter weise eingestellt.

Um seine Wirkung zu sichern, sollte die Gesamtdicke des Korrosionsschutzüberzugs mindestens 3 µm, insbesondere mindestens 7 µm betragen. Trotz höherer Auflagenstärke und Dicke des Korrosionsschutzüberzugs bleibt auf Grund der erfindungsgemäßen Einstellung seiner Legierungsgehalte und insbesondere seines Al-Gehalts eine gute Schweißbarkeit des erfindungsgemäßen Überzugs gewährleistet. Um die Verformbarkeit nicht übermäßig zu behindern, sollte die Dicke des Überzugs jedoch nicht größer als 20 µm eingestellt werden.

Der Fe-Gehalt des Schmelzenbads ist auf höchstens 1 Gew.-%, insbesondere 0,5 Gew.-%, beschränkt, um die Schlackenbildung auf dem Schmelzenbad auf einem niedrigen Niveau zu halten.

Die Anwendung der Erfindung ist nicht auf Stahlflachprodukte beschränkt, die aus einer bestimmten Stahlsorte hergestellt ist, sondern eignet sich zum Beschichten sämtlicher Stahlbänder und -bleche, an die besondere Anforderungen hinsichtlich des Korrosionsschutzes gestellt werden.

Zum Nachweis der Wirksamkeit der Erfindung sind eine Vielzahl von Versuchen durchgeführt worden und die Eigenschaften der jeweils erzeugten, mit einem erfindungsgemäßen Überzug versehenen Stahlflachprodukt-Proben 1 - 22 bestimmt worden. Zum Vergleich sind darüber hinaus Stahlproben R1,R2,R3 erzeugt worden, die in konventioneller Weise mit einem metallischen Überzug versehen worden sind, der sie gegen Korrosion schützen sollte.

Die untersuchten Blechproben 1 - 22 und R1,R2,R3 sind jeweils aus einem konventionellen IF-Stahl erzeugt worden, der neben Eisen und unvermeidbaren Verunreinigungen (in Gew.-%) C: 0,002 %, Si: 0,01 %, Mn: 0,20 %, P: 0,012 %, S: 0,01 %, Ti: 0,07 % und Al: 0,04 % enthielt.

Die Blechproben 1 bis 22 sind im kontinuierlichen Durchlauf bei einer Glühtemperatur TG geglüht und anschließend mit einer Badeintrittstemperatur TE in ein Schmelzenbad geleitet worden, das auf einer Schmelzenbadtemperatur TS gehalten worden ist und neben Zink und unvermeidbaren Verunreinigungen im erfindungsgemäß vorgegebenen Bereich liegende Gehalte an Mg und Al aufwies.

Die zum Vergleich angefertigten Referenzproben R1,R2,R3 sind ebenfalls bei einer Temperatur TG geglüht und dann mit einer Badeintrittstemperatur TE durch ein auf einer Schmelzenbadtemperatur TS gehaltenes Schmelzenbad geleitet worden. Im Unterschied zu dem bei der Beschichtung der erfindungsgemäßen Proben 1 bis 22 verwendeten Schmelzenbad enthielt das für den Vergleich eingesetzte Schmelzenbad jedoch neben Zn nicht im erfindungsgemäß vorgegebenen Bereich liegende Gehalte an Al und Mg.

In Tabelle 1 sind für die untersuchten erfindungsgemäßen Proben 1 bis 22 sowie die Referenzproben R1,R2,R3 die Glühtemperatur TG, die Badeintrittstemperatur TE, und die jeweilige Schmelzenbadtemperatur TS sowie die Gehalte an Mg und Al in den jeweils erhaltenen Zn-Mg-Al-Überzügen angegeben. Darüber hinaus sind in Tabelle 1 die jeweiligen Gehalte an Mg und Al des jeweils verwendeten Zn-Mg-Al-Schmelzenbades aufgeführt.

In Tabelle 2 sind darüber hinaus die jeweilige Überzugsdicke D sowie die Bewertung H der im Kugelschlagtest gemäß SEP 1931 ("SEP 1931" = Stahl Eisen Prüfblatt 1931, Verlag Stahleisen GmbH, Ausgabe 01.91) geprüften Härte und die Bewertung Z der Zeit eingetragen, nach der es im gemäß DIN EN ISO 9227 SST durchgeführten Salzsprühtest zur Bildung von Rotrost auf der jeweiligen Probe gekommen ist.

Bei den Bewertungen H der Ergebnisse des Kugelschlagtest bedeutet "1": keine Risse, "2": feine Risse, "3": Risse und feine Abblätterungen, "4": starke Abblätterungen.

Bei der Bewertung Z der Ergebnisse des Salzsprühtests sind folgende Stufen verwendet worden: "1" erste Rotrostbildung nach weniger als 500 h, "2": erste Rotrostbildung nach 500 - 1000 h, "3": erste Rotrostbildung nach >1000 - 1500 h, und "4": erste Rotrostbildung erst nach mehr als 1500 h.

Des Weiteren sind in Tabelle 2 die Ergebnisse KF der gemäß VDA 621-415 durchgeführten Prüfung der Proben 1- 22 und R1,R2,R3 auf Korrosion an einem gemäß SEP 1160 ("SEP 1160" = Stahl Eisen Prüfblatt 1160, Verlag Stahleisen GmbH, Ausgabe 06-2004) ausgebildeten Blechflansch eingetragen. Die in der betreffenden Spalte angegebenen Werte bezeichnen die Anzahl an durchlaufenen Zyklen, die bis zu einer 10 % übersteigenden Rotrostanteil durchlaufen worden sind. Besonders gute Korrosionsbeständigkeiten sind dabei durch oberhalb von 10 liegende Werte gekennzeichnet, während die unter 10 liegenden Werte den Anforderungen an die Korrosionsbeständigkeit im Flansch nicht gerecht werden.

Schließlich ist in der letzten Spalte von Tabelle 2 die Bewertung SE der Ergebnisse der Schweißeignungsprüfung (Widerstandspunktschweißen (WPS)) eingetragen. Dabei bedeutet der Wert "1", dass weniger als 200 Schweißpunkte, der Wert "2", dass 200 - 500 Schweißpunkte, und der Wert "3", dass mehr als 500 Schweißpunkte erzeugt werden konnten.

Es zeigt sich, dass die Haftung eines erfindungsgemäß erzeugten und zusammengesetzten Überzugs auf den Proben 1 - 22 der Haftung der konventionell erzeugten Überzüge der Referenzproben R1,R2,R3 mindestens ebenbürtig ist. Gleichzeitig weisen die erfindungsgemäß beschichteten Proben 1 - 22 gegenüber den Referenzproben R1,R2,R3 eine deutlich überlegene Korrosionsschutzwirkung auf.

**Tabelle 1**

| **Probe** | **TG [°C]** | **TE [°C]** | **TS [°C]** | **Überzug** | | **Schmelzenbad** | |
|---|---|---|---|---|---|---|---|
| | | | | **Mg** **[Gew.-%]** | **Al** **[Gew.-%]** | **Mg** **[Gew.-%]** | **Al** **[Gew.-%]** |
| 1 | 800 | 450 | 440 | 4,01 | 0,53 | 4,0 | 0,5 |
| 2 | 800 | 450 | 440 | 5,03 | 0,57 | 5,2 | 0,5 |
| 3 | 800 | 470 | 440 | 5,05 | 0,62 | 5,2 | 0,5 |
| 4 | 800 | 500 | 440 | 5,08 | 0,67 | 5,3 | 0,5 |
| 5 | 800 | 450 | 440 | 5,10 | 0,93 | 5,3 | 0,9 |
| 6 | 800 | 470 | 440 | 5,09 | 0,96 | 5,2 | 0,8 |
| 7 | 800 | 500 | 440 | 5,12 | 1,01 | 5,3 | 0,8 |
| 8 | 800 | 500 | 490 | 4,89 | 1,22 | 5,0 | 1,0 |
| 9 | 800 | 470 | 450 | 4,69 | 1,55 | 5,0 | 1,5 |
| 10 | 800 | 490 | 460 | 5,01 | 1,72 | 5,2 | 1,6 |
| 11 | 800 | 520 | 460 | 5,05 | 1,79 | 5,2 | 1,5 |
| 12 | 800 | 450 | 440 | 5,97 | 0,61 | 6,1 | 0,6 |
| 13 | 800 | 450 | 440 | 6,05 | 1,01 | 6,3 | 0,9 |
| 14 | 800 | 470 | 460 | 6,16 | 1,70 | 6,4 | 1,6 |
| 15 | 800 | 490 | 460 | 6,12 | 1,61 | 6,3 | 1,5 |
| 16 | 800 | 520 | 460 | 6,19 | 1,74 | 6,4 | 1,5 |
| 17 | 800 | 450 | 440 | 7,13 | 0,53 | 7,4 | 0,5 |
| 18 | 800 | 470 | 460 | 7,21 | 1,10 | 7,6 | 1,0 |
| 19 | 800 | 470 | 460 | 7,33 | 1,58 | 7,2 | 1,5 |
| 20 | 800 | 450 | 440 | 7,96 | 0,59 | 8,1 | 0,6 |
| 21 | 800 | 450 | 440 | 8,00 | 1,15 | 8,3 | 1,0 |
| 22 | 800 | 470 | 460 | 7,99 | 1,68 | 8,2 | 1,5 |
| R1 | 800 | 470 | 450 | 0,82 | 0.45 | 0,9 | 0.3 |
| R2 | 800 | 470 | 450 | 1,21 | 0,51 | 1,3 | 0,4 |
| R3 | 800 | 470 | 450 | 2,99 | 6,02 | 3,2 | 6,2 |

**Tabelle 2**

| **Lfd. Nr:** | **D [µm]** | **H** | **Z** | **KF** | **SE** |
|---|---|---|---|---|---|
| 1 | 19,8 | 2 | 4 | 15 | 1 |
| 2 | 8,4 | 1 | 3 | 15 | 3 |
| 3 | 8,1 | 1 | 3 | 15 | 3 |
| 4 | 8,0 | 1 | 3 | 15 | 3 |
| 5 | 7,9 | 1 | 3 | 15 | 3 |
| 6 | 8,2 | 1 | 3 | 15 | 3 |
| 7 | 8,1 | 1 | 3 | 15 | 3 |
| 8 | 7,3 | 1 | 3 | 15 | 3 |
| 9 | 7,2 | 11 | 3 | 15 | 3 |
| 10 | 7,4 | 1 | 3 | 15 | 3 |
| 11 | 7,5 | 1 | 3 | 15 | 3 |
| 12 | 3,8 | 1 | 2 | 5 | 3 |
| 13 | 3,0 | 1 | 2 | 5 | 3 |
| 14 | 7,4 | 1 | 3 | 15 | 3 |
| 15 | 7,6 | 1 | 3 | 15 | 3 |
| 16 | 7,3 | 1 | 3 | 15 | 3 |
| 17 | 7,7 | 2-3 | 3 | 10 | 3 |
| 18 | 7,0 | 2 | 3 | 20 | 2 |
| 19 | 8,0 | 1-2 | 4 | 20 | 2 |
| 20 | 7,6 | 2-3 | 4 | 10 | 2 |
| 21 | 13,5 | 2 | 4 | 20 | 2 |
| 22 | 10,4 | 1-2 | 4 | 20 | 2 |
| R1 | 7,2 | 1-2 | 1 | 5 | 3 |
| R2 | 7,4 | 1-2 | 1 | 5 | 3 |
| R3 | 7,8 | 2-3 | 4 | 10 | 1 |

## Patentansprüche

1. Stahlflachprodukt mit einem vor Korrosion schützenden metallischen Überzug, der neben Zink und unvermeidbaren Verunreinigungen (in Gew.-%)
Mg: 4 - 8 %
Al: 0,5 - 1,8 %
sowie optional eines oder mehrere der folgenden Elemente mit einem unterhalb der zu jedem dieser Elemente jeweils angegebenen Obergrenze liegenden Gehalte enthält:
Si: < 2 %, Pb: < 0,1 %,Ti: < 0,2 %, Ni: < 1 %, Cu: < 1 %, Co: < 0,3 %, Mn: < 0,5 %, Cr: < 0,2 %,
Sr: < 0,5 %, Fe: < 3 %, B: < 0,1 %, Bi: < 0,1 %,
Cd: < 0,1 %, REM < 0,2 %, Sn < 0,5 %.

2. Stahlflachprodukt nach Anspruch 1, **dadurch gekennzeichnet, dass** der Mg-Gehalt des metallischen Überzugs mindestens 4,5 Gew.-% beträgt.

3. Stahlflachprodukt nach einem der voranstehenden Ansprüche, **dadurch gekennzeichnet, dass** der Mg-Gehalt des metallischen Überzugs maximal 6,5 Gew.-% beträgt.

4. Stahlflachprodukt nach einem der voranstehenden Ansprüche, **dadurch gekennzeichnet, dass** der Al-Gehalt des metallischen Überzugs mindestens 1,0 Gew.-% beträgt.

5. Stahlflachprodukt nach einem der voranstehenden Ansprüche, **dadurch gekennzeichnet, dass** der Al-Gehalt des metallischen Überzugs maximal 1,5 Gew.-% beträgt.

6. Stahlflachprodukt nach einem der voranstehenden Ansprüche, **dadurch gekennzeichnet, dass** die Summe der Gehalte der optional in dem metallischen Überzug vorhandenen Elemente "Si, Pb, Ti, Ni, Cu, Co, Mn, Cr, Sr, B, Bi, Cd, REM und Sn" maximal 0,8 Gew.-% beträgt.

7. Stahlflachprodukt nach einem der voranstehenden Ansprüche, **dadurch gekennzeichnet, dass** der metallische Überzug höchstens 0,3 Gew.-% Verunreinigungen enthält.

8. Verfahren zum Erzeugen eines vor Korrosion schützenden metallischen Zn-Mg-Überzugs auf einem Stahlflachprodukt, umfassend folgende im kontinuierlichen Durchlauf absolvierte Arbeitsschritte:
- Glühen des Stahlflachproduktes bei einer 500 - 900 °C betragenden Glühtemperatur;
- Abkühlen des Stahlflachprodukts auf eine im Bereich von 360 - 710 °C liegende Badeintrittstemperatur;
- Durchleiten des Stahlflachprodukts durch ein auf eine Schmelzenbadtemperatur von 350 - 650 °C erwärmtes Zn-Mg-Schmelzenbad, das neben Zink und unvermeidbaren Verunreinigungen (in Gew.-%)
Mg: 4 - 8 %
Al: 0,5 - 1,8 %
sowie optional eines oder mehrere der folgenden Elemente mit einem unterhalb der zu jedem dieser Elemente jeweils angegebenen Obergrenze liegenden Gehalt enthält:
Si: < 2 %, Pb: < 0,1 %, Ti: < 0,2 %, Ni: < 1 %,
Cu: < 1 %, Co: < 0,3 %, Mn: < 0,5 %, Cr: < 0,2 %,
Sr: < 0,5 %, Fe: < 3 %, B: < 0,1 %, Bi: < 0,1 %,
Cd: < 0,1 %;
- Einstellen der Schichtdicke des metallischen Überzugs durch Entfernen von überschüssiger Zn-Mg-Schmelze.

9. Verfahren nach Anspruch 8, **dadurch gekennzeichnet, dass** der Fe-Gehalt des Schmelzenbads auf höchstens 1 Gew.-% beschränkt ist.

10. Verfahren nach einem der voranstehenden Ansprüche, **dadurch gekennzeichnet, dass** die Schmelzenbadtemperatur 430 - 490 °C beträgt.

11. Verfahren nach einem der Ansprüche 8 bis 10, **dadurch gekennzeichnet, dass** die Differenz zwischen der Badeintrittstemperatur des Stahlflachprodukts und der Schmelzenbadtemperatur 10 - 60 °C beträgt.

12. Verfahren nach einem der Ansprüche 8 bis 11, **dadurch gekennzeichnet, dass** die Schichtdicke des metallischen Überzugs 3 - 20 µm beträgt.
